# EUROPEAN PATENT SPECIFICATION

(11) **EP 0 564 429 B1**
(45) Date of publication and mention of the grant of the patent: **17.05.2000**
(21) Application number: 93850059.2
(22) Date of filing: 29.03.1993
(51) Int. Cl.: H04Q 7/36

(54) **Cell extension in a cellular telephone system**
Zellenerweiterung in einem zellulären Telefonsystem
Extension de cellules dans un système de téléphone cellulaire

(30) Priority: 30.03.1992 US 859962
(43) Date of publication of application: 06.10.1993
(73) Proprietor: TELEFONAKTIEBOLAGET LM ERICSSON, 126 25 Stockholm (SE)
(72) Inventor: Bodin, Stig Roland, S-165 56 Spanga (SE); Chambert, Georg William Robin, S-756 47 Uppsala (SE)
(74) Representative: Norin, Klas

(56) References cited:
- EP-A- 0 171 525
- EP-A- 0 210 698
- EP-A- 0 295 227
- EP-A- 0 451 694

## Description

### Field of the Invention

The present invention relates generally to cellular telephone systems having channels for transmitting information between base stations and mobile stations. More precisely, the invention relates to a cellular telephone system in which the mobile station can operate at an extended distance from the base station.

### Background of the Invention

In cellular telephone systems it is fundamental that a mobile station with an established connection on a radio channel shall be able to maintain the established connection when moving from one cell serviced by a base station to another cell serviced by another base station. The process by which a mobile station can maintain an established connection when moving in a cellular telephone system is generally called a handoff.

The operator of a cellular telephone system often has to provide telephone service to both profitable and more densely populated city areas and relatively less profitable and less densely populated rural areas or coastal areas. It is therefore desirable that a cellular telephone system cover as much possible area with a minimum of equipment. One method of accomplishing this objective is to use relatively large cells.

The first cellular mobile radio systems placed in public use were analog systems that were typically used for speech or other types of analog information. These systems include multiple radio channels for transmitting analog information between base stations and mobile stations by transmitting analog modulated radio signals. One such system is the Nordik Mobile Telephone System NMT-450. Another known cellular radio system is the AMPS Mobile Radio System in the United States. The rapidly increasing usage of mobile radio systems has necessitated development of newer, more advanced digital systems that can accommodate a larger number of mobile stations using time division multiple access (TDMA) technology and code division multiple access (CDMA) technology.

In digital mobile telephone systems, e.g., GSM, ADC, and JDC, each radio carrier is divided into frames and each frame is subdivided into a number of time slots. Each time slot typically carries one connection (channel), and a burst of data is transmitted during each time slot. These types of systems are referred to as TDMA systems. Due to the finite propagation speed of radio signals, mobile stations at a distance from the base station must transmit a burst of data at a certain time in advance in order that the burst of data or radio signal arrives at the base station in the correct time slot.

The base station typically measures the time of arrival for the initial burst of data. An appropriate time interval for advanced transmission is calculated and transmitted to the mobile station.

In the GSM system, the coding of this time interval, combined with the specified TDMA structure gives a maximum cell radius of approximately 35 kilometers. Examples of a system of this type are described in the European patent application numbers EP-A-0 451 694 and EP-A-0 171 525.

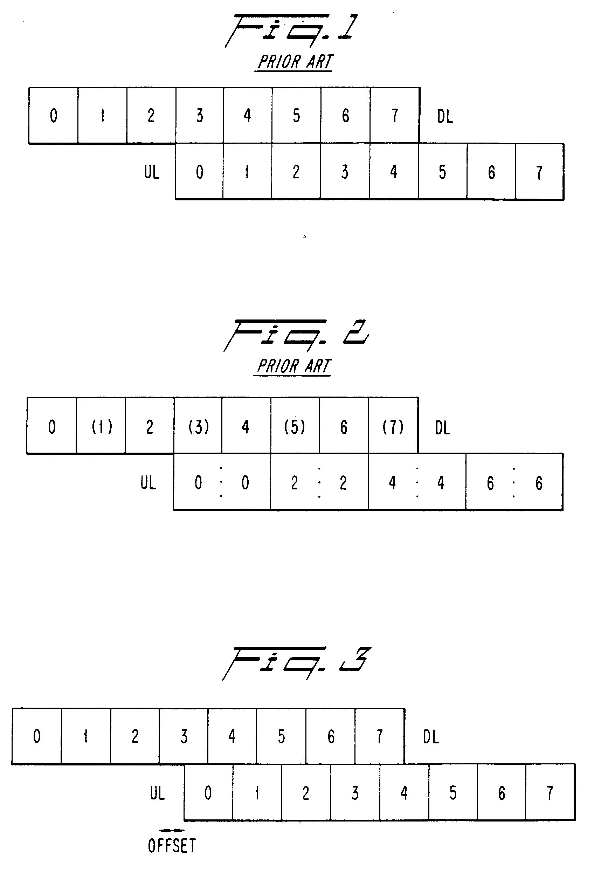

In a TDMA system such as the GSM system, mobile stations can share a single carrier signal because the signal is divided into frames. Each frame is subdivided into time slots and mobile stations are assigned to one or more time slots depending upon the transmission mode. Each mobile stations transmits and receives short bursts of data during its time slot which is advanced as necessary. Various published standards, such as those for the GSM digital mobile system in Europe and the EIA Interim Standard (IS-54) in the United States, set forth the specification for the transmission of a carrier signal that is modulated with the burst of digital data. For example, under the GSM standard, the carrier signal is divided into a frame consisting of eight equal time slots as illustrated in Fig. 1. The carrier signal is called an uplink (UL) when it is transmitted from the base station to the mobile station, and the carrier signal is called a downlink (DL) when it is transmitted from the mobile station to the base station.

In the normal transmission mode as illustrated in Fig. 1, each channel utilizes only one time slot during each uplink and downlink frame. Thus, a single frame can accommodate eight traffic channels under the GSM standard. When operating in the normal transmission mode, the radio signals are more susceptible to the loss of data due to noise or interference. Accordingly, the mobile stations must operate at a relatively close distance to the base station, and the effective cell size is limited.

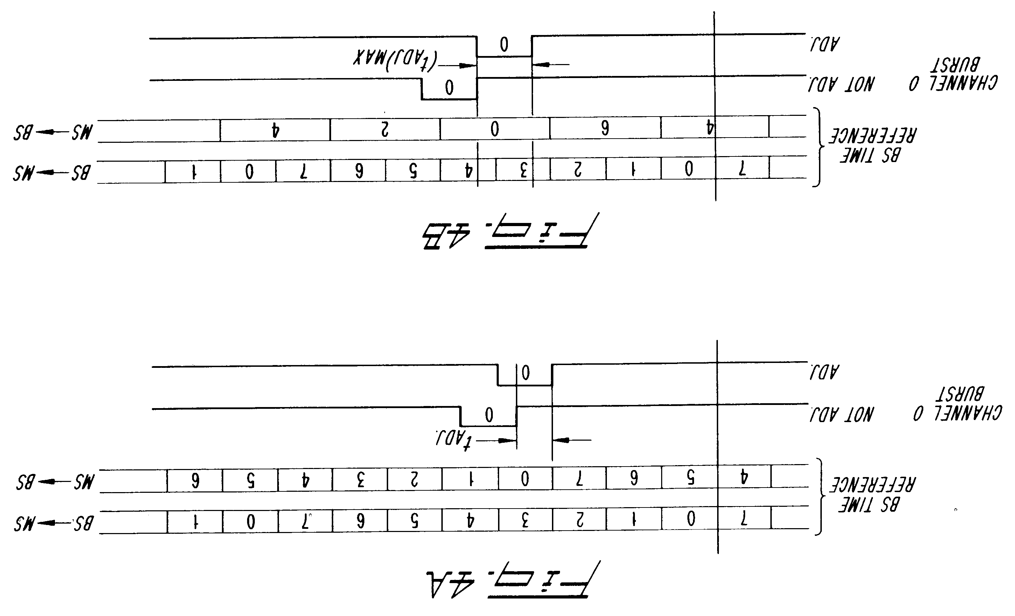

In the conventional extended transmission mode as illustrated in Fig. 2, the effective size of a cell in the GSM system can be enlarged, because the conventional extended range channels have longer time slots which are less susceptible to interference and can accommodate longer propagation delays. In the conventional extended transmission mode, the channel on which the data is transmitted utilizes two adjacent time slots in a frame. Thus, under the GSM standard, a single frame can accommodate four conventional extended channels. Typically, the eight time slots are numbered 0, 1, 2, 3, 4, 5, 6, and 7, and each conventional extended channel occupies two adjacent time slots. In Fig. 2, the first two adjacent time slots, in the downlink transmission from the mobile station to the base station, time slots 0, (1) correspond to the first channel.

It should be noted that the uplink transmission in both Fig. 1 and 2 is offset from the downlink by three time slots which is typical for prior art TDMA systems. In other words, the beginning of the 0 time slot for downlink transmission (mobile station to base station) is advanced exactly three time slots from the 0 time slot of the uplink transmission (base station to mobile station). The time slots of the base station are considered to be reference time slots.

It is possible to combine normal range channels of Fig. 1 with conventional extended range channels of Fig. 2 in the same cell and even on the same carrier signal. Calls are then set up on a channel of an appropriate channel type, depending upon the distance, and a call can be handed over to the other channel type if the distance changes. The only limitation is that the conventional extended channel must be able to accept handover access bursts within a slot consisting of two normal time slots.

While the conventional extended transmission mode can substantially increase the operating distance of a mobile station from a base station, there is a corresponding decrease is traffic load, because the number of channels is decreased from eight to four. Accordingly, there is a need for a cellular telephone system which can allow mobile stations to operate at a substantially increased distance from the base station without a corresponding decrease in the number of channels.

### Summary of the Invention

The present invention provides an improved cellular telephone system of the type having TDMA channels. The improved system allows a mobile station to operate at an extended distance from the base station, thereby effectively increasing the cell size of the base station without decreasing the number of available channels. In the present invention, the beginnings of the time slots of the uplink transmission are offset in time relative to the beginnings of the time slots of the downlink transmission by an additional amount of time. By offsetting the beginnings of the time slots of the downlink transmission relative to the uplink transmission and by including a timing advance into the transmissions, the mobile stations are able to operate at a substantially greater distance from the base station than attainable in the prior art. Moreover, there is no need to modify the mobile stations. The present invention is particularly well suited for use in rural and coastal areas.

### Brief Description of the Drawings

Fig. 1 is a diagram of the prior art uplink and downlink time slots of a GSM time frame operating in a normal mode;
Fig. 2 is a diagram of the prior art uplink and downlink time slots of a GSM system operating in the conventional extended mode;
Fig. 3 is a diagram of the novel uplink and downlink time slots of the present invention;
Figs. 4A, 4B, and 4C, are diagrams which compare the time slots of a normal transmission mode, a conventional extended transmission mode, and the transmission mode of the present invention; and
Figs. 5A, 5B and 5C are diagrams of the coverage areas provided by channels operating in the normal transmission mode, the conventional extended transmission mode, and the novel extended transmission mode of the present invention.
Fig. 6 is a diagram of a typical cellular telephone system.

### Detailed Description of the Invention

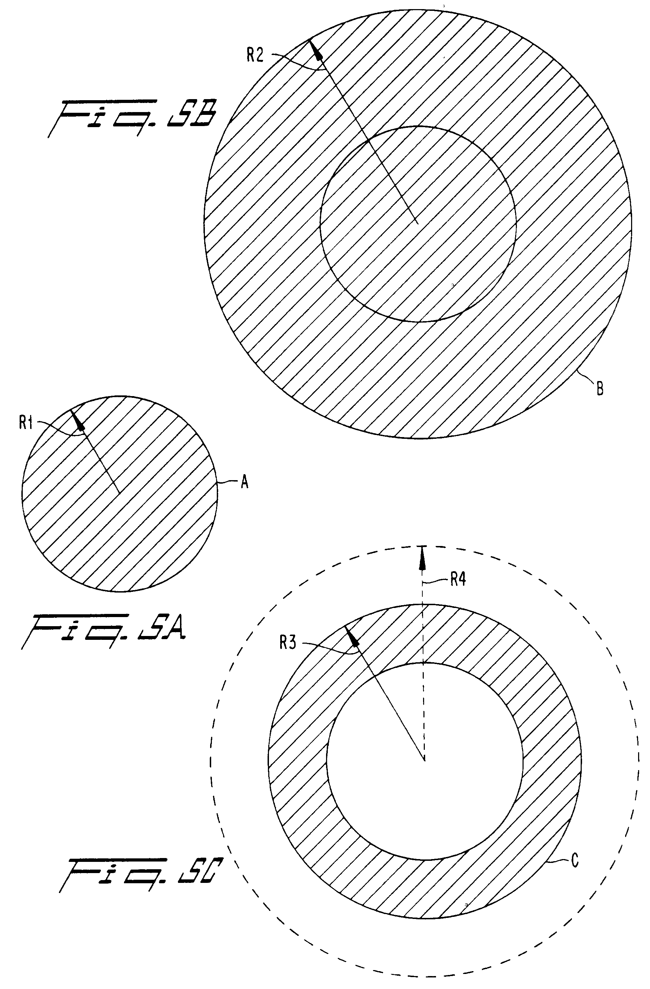

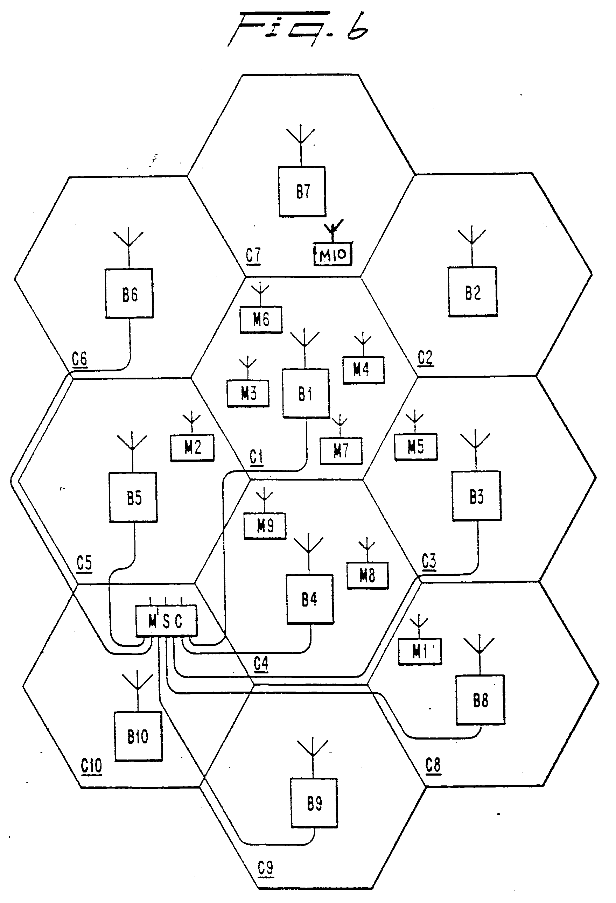

Fig. 6 illustrates ten cells C1-C10 in a cellular telephone system. Normally a cellular telephone system according to the present invention would be implemented with more than ten cells, however, for the purposes of simplicity, the present invention can be explained using the simplified representation illustrated in Fig. 6.

For each cell C1-C10, there is a base station B1-B10 with the same reference number as the corresponding cell. Fig. 6 illustrates the base stations as situated in the vicinity of the center cell and having omni-directional antennas. The cells C1 - C10 are, therefore, schematically represented as hexagons. The base stations of adjacent cells may, however, be co-located in the vicinity of the cell borders and have directional antennas as is well known to those skilled in the art.

Fig. 6 also illustrates ten mobile stations M1-M10, movable within a cell and from one cell to another. In a typical cellular telephone system there are normally more than ten cellular mobile stations. In fact, there are typically many times the number of mobile stations as there are base stations.

However, for the purposes of explaining the present invention, the reduced number of mobile stations is sufficient. Also illustrated in Fig. 6 is a mobile switching center MSC. The mobile switching center is connected to all ten base stations B1-B10 by cables. The mobile switching center MSC is also connected by cables to a fixed public switching telephone network or similar fixed network. All cables from the mobile switching center MSC to the base stations B1-B10 and cables to the fixed network are not illustrated.

In the present invention, the communication channels are digital channels utilizing TDMA techniques. In other words, each carrier signal is divided into frames which are subdivided into time slots. During communication between a base station and a mobile station, the mobile station is assigned to a particular channel, which comprises one or more time slots in a frame. The structure of the radio channels applicable to the present invention will be hereinafter described in greater detail. The channels may generally be categorized as either (1) access channels which transmit control information for setting up communication between the base station and a mobile station, or (2) dedicated channels which actually transmit communications such as speech or data. Access channels are primarily used for monitoring and controlling mobile stations during the set up of the connection and during the registration of a mobile station, i.e., when the mobile station initially reports to the base station of the cell in which it is located.

As explained above, the conventional method to extend the range of a cell in a cellular telephone system is to utilize channels occupying two consecutive time slots. Regulation of the advanced transmission time is done until the maximum advanced time has been reached which is sixty-three bit periods for the GSM system. The burst is then allowed to slide into the second of the two time slots. This solution is illustrated in Fig. 2.

The novel extended cells of the present invention are achieved by changing the TDMA structure at the base station by adding an additional offset delay to the time reference for the uplink connections which are serving the extended cell area. This delay of the time slot reference, allows transmission bursts originating from the remote mobiles to arrive in the right time slot. It is also notable that the present invention only needs modification at the base station and not the mobile stations.

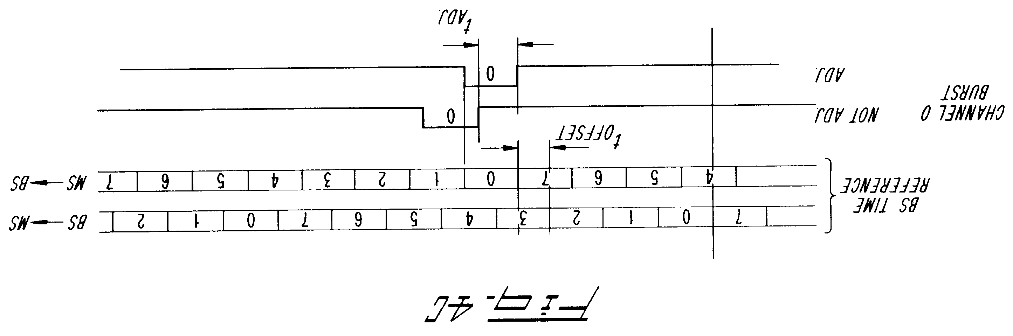

The TDMA signal structure of the present invention is illustrated in Fig. 3. In Fig. 3, the time slots of the downlink (DL) transmission are designated 0-7 as is conventional in a GSM system. The time slots of the uplink (UL) are also designated as 0-7, but the time slots of the uplink transmission are shifted three time slots and then offset by an additional predetermined amount from the time slots of the downlink transmission as indicated by the two-headed arrow labeled offset. In Fig. 3, the beginning of the zero time slot of the uplink transmission is illustrated as being shifted three time slots and then offset approximately one half a time slot from the beginning of the zero time slot of the downlink transmission. In a conventional GSM system the beginning of the zero time slot of the uplink transmission is shifted exactly three time slots from the beginning of the zero time slot of the downlink transmission. Accordingly, the present invention, as illustrated in Fig. 3, offsets the time slot by approximately an additional half of a time slot. The present invention is not limited to offsetting the start of a time slot by half a time slot. In fact, if the start of the time slot is offset by a greater amount, the cell size is increased correspondingly.

The access channel for the present invention is substantially identical to the prior art extended transmission mode illustrated in Fig. 2. When the mobile station is accessing the system, an access burst is transmitted on the access channel. This burst is shorter than a normal burst so that it will arrive within the intended time slot, even though there is no advanced transmission offset. The mobile station, however, must be within the normal cell range. The access burst position within the time slot is measured, and the control mechanism for the advanced transmission is started.

When a mobile station is accessing the system from a distance greater than the normal maximum cell radius, 35 kilometers for the GSM system, the access burst will slide into the time slot following the intended one. In an extended cell range, the access channel handling must then be modified so that access bursts arriving within any two consecutive time slots can be detected and the delay can be measured.

The measured access delay is then used to determined if the call shall be set up on a normal channel or on a channel with extended range capability. The extended range transmission mode may either be the conventional extended mode or the novel transmission mode of the present invention. The access channel used in the improved radio communication system of the present invention is the same whether the conventional extended transmission mode or the novel extended transmission mode is utilized.

Referring now to Figs. 4A, 4B, and 4C, a comparison between the normal transmission mode, the conventional extended transmission mode and the novel extended mode of the present invention can be made. Figs. 4A through 4C illustrate the uplink and downlink transmissions between the base station and the mobile stations. The uplink transmission from the base station to the mobile station is designated as BS-MS, and the downlink transmission from the mobile station to the base station is designated MS-BS.

In Fig. 4A it can be appreciated that in the normal transmission mode both the uplink and downlink transmissions are divided into eight time slots 0-7 and that the beginning of the zero time slot of the uplink transmission is shifted exactly three time slots from the beginning of the zero time slot of the downlink transmission. A downlink transmission or burst of data is also advanced by a time period T_{adv} in order to allow for propagation delays. The time period T_{adv} allows a transmission to or from a distant mobile station to arrive during the correct time slot.

Referring now to Fig. 4B, there is a diagram of the uplink transmission and downlink transmission for a cellular telephone system operating in the conventional extended mode. In the conventional extended mode, the uplink transmission BS-MS is divided into eight time slots, and the downlink transmission MS-BS is divided into four time slots. It can be appreciated that the beginning of the zero time slot for the uplink transmission is shifted exactly three conventional time slots from the beginning of the corresponding time slot 4 for the downlink transmission. It can be further appreciated that the burst of data in the zero time slot of the uplink is slightly advanced in order that the zero time slot burst arrives within the correct time slot.

Referring now to Fig. 4C, the uplink and downlink transmission for the novel extended transmission modes of the present invention are illustrated. It can be appreciated that both the uplink transmission, BS-MS and the downlink transmission, MS-BS are both divided into time slots 0-7. It can be further appreciated that the beginning of the zero time slot of the uplink transmission is shifted three time slots and then offset by an additional one half time slot from the beginning of the downlink zero time slot. A burst of data is also advanced by the time T_{adv}. If a burst of data on the uplink transmission is advanced slightly then the zero channel burst will be received at the mobile station completely within the correct time slot.

Referring now to Figs. 5A, 5B, and 5C, the diagrams illustrated in these figures depict the coverage areas or cell sizes when operating in the normal transmission mode, the conventional extended transmission mode and the novel extended transmission mode of the present invention. As illustrated in Fig. 5A, in the normal transmission mode the coverage area or cell size is a circular area A which has a radius of R1. As illustrated in Fig. 5B, in the conventional extended transmission mode, the coverage area is a circular area B having a maximum radius R2 which is typically 35 kilometers. As illustrated in Fig. 5C in the novel extended transmission mode of the present invention, the coverage area has a ring shaped area C having a radius R3, if the additional offset is approximately one half a time slot. The ring shaped area C has substantially the same outer periphery as the conventional extended mode. In the novel extended transmission mode, if the offset is increased by an additional time t₁ which is greater than the time t associated with radius R3, the effective radius of the cell can be increased to the radius R4 and the coverage area would include the ring shaped areas between radius R₃ and radius R₄. The ability to increase substantially the radius R3 is particularly significant in coastal areas where it is difficult to locate fixed base stations for marine use.

## Claims

1. A method for allowing mobile stations in a cellular radio communication system having an extended cell range and including at least a fixed base station and a number of mobile stations to operate at an increased distance from the base station, at least one of said mobile stations being in said extended cell range, said base station and said mobile stations transmitting and receiving in corresponding time slots in a transmitting frame and a receiving frame respectively, each transmitting frame being displaced a first standardized time offset relative to a receiving frame, each frame including a certain number of time slots in accordance with a conventional normal transmission mode, wherein the method includes the step of transmitting an access burst from said mobile stations within a time slot which is extended in accordance with a conventional extended transmission mode in order to measure a delay between a remote mobile station at an extended distance from the base station, the method being characterized by the steps of:
determining from said measured delay whether a call should be set up in accordance with said conventional normal transmission mode, said conventional extended transmission mode or in accordance with an extended transmission mode; and
adding, in said base station to said first standardized time offset, a second time offset related to said measured delay, if it is determined that said call should be set up in said extended transmission mode, whereby the base station receives bursts from said mobile stations and the mobile stations receive bursts from the base station while maintaining the same number of time slots as in said conventional normal transmission mode.

2. A cellular radio communication system having an extended cell range and including at least a fixed base station and a number of mobile stations, at least one of said mobile stations being in said extended cell range, said base station and said mobile stations transmitting and receiving in corresponding time slots in a transmitting frame and a receiving frame respectively, each transmitting frame displaced a first standardized time offset relative to a receiving frame, each frame including a certain number of time slots in accordance with a conventional normal transmission mode, wherein the cellular radio communication system is adapted to transmit an access burst from said mobile stations within a time slot which is extended in accordance with a conventional extended transmission mode in order to measure a delay between a remote mobile station at an extended distance from the base station, the cellular radio communication system being characterized by:
means for determining from said measured delay whether a call should be set up in accordance with said conventional normal transmission mode, said conventional extended transmission mode or in accordance with an extended transmission mode; and
means for adding, in said base station to said first standardized time offset, a second time offset related to said measured delay, if it is determined that said call should be set up in said extended transmission mode, whereby the base station receives bursts from said mobile stations and the mobile stations receive bursts from the base station while maintaining the same number of time slots as in said conventional normal transmission mode.

## Patentansprüche

1. Verfahren, um Mobilstationen in einem Zellularfunkkommunikationssystem mit einem erweiterten Zellenbereich und mit Wenigstens einer festen Basisstation und einer Anzahl von Mobilstationen zu ermöglichen, in einem vergrösserten Abstand von der Basisstation zu arbeiten, wobei wenigstens eine der Mobilstationen sich in dem erweiterten Zellenbereich befindet, die Basisstation bzw. die Mobilstationen in entsprechenden Zeitschlitzen in einem Senderahmen und einem Empfangsrahmen senden und empfangen, wobei jeder Senderahmen um einen ersten standardisierten Zeitversatz relativ zu einem Empfangsrahmen versetzt ist, jeder Rahmen eine bestimmte Anzahl von Zeitschlitzen gemäss einem herkömmlichen normalen Übertragungsmodus umfasst, wobei das Verfahren den Schritt umfasst, bei dem ein Zugriffsburst von den Mobilstationen innerhalb eines Zeitschlitzes übertragen wird, der gemäss einem herkömmlichen erweiterten Übertragungsmodus erweitert ist, um eine Verzögerung zwischen einer entfernten Mobilstation in einem erweiterten Abstand von der Basisstation zu messen, wobei das Verfahren durch die folgenden Schritte gekennzeichnet ist:
Bestimmen aus der gemessenen Verzögerung, ob ein Anruf gemäss dem herkömmlichen normalen Übertragungsmodus, dem herkömmlichen erweiterten Übertragungsmodus oder gemäss einem erweiterten Übertragungsmodus aufgebaut werden soll;
Hinzufügen eines zweiten Zeitversatzes, der sich auf die gemessene Verzögerung bezieht, zu dem ersten standardisierten Zeitversatz in der Basisstation, wenn bestimmt wird, dass der Anruf in dem erweiterten Übertragungsmodus aufgebaut werden sollte, wobei die Basisstation Bursts von den Mobilstationen empfängt und die Mobilstationen Bursts von der Basisstation empfangen, während die gleiche Anzahl von Zeitschlitzen wie in dem herkömmlichen normalen Übertragungsmodus aufrechterhalten wird.

2. Zellularfunkkommunikationssystem mit einem erweiterten Zellenbereich und mit wenigstens einer festen Basisstation und einer Anzahl von Mobilstationen, wobei wenigstens eine der Mobilstationen in dem erweiterten Zellenbereich ist, die Basisstation bzw. die Mobilstationen in entsprechenden Zeitschlitzen in einem Senderahmen und einem Empfangsrahmen senden und empfangen, jeder Senderahmen relativ zu einem Empfangsrahmen um einen ersten standardisierten Zeitversatz verschoben ist, jeder Rahmen eine bestimmte Anzahl von Zeitschlitzen gemäss einem herkömmlichen Übertragungsmodus umfasst, wobei das Zellularfunkkommunikationssystem dafür ausgelegt ist, um einen Zugriffsburst von den Mobilstationen innerhalb eines Zeitschlitzes zu senden, der gemäss einem herkömmlichen erweiterten Übertragungsmodus vergrössert ist, um eine Verzögerung zwischen einer entfernten Mobilstation in einem erweiterten Abstand von der Basisstation zu messen, wobei das Zellularfunkkommunikationssystem gekennzeichnet ist durch:
eine Einrichtung zum Bestimmen, ob ein Anruf gemäss dem herkömmlichen normalen Übertragungsmodus, dem herkömmlichen erweiterten Übertragungsmodus oder gemäss einem erweiterten Übertragungsmodus ausgeführt werden sollte, aus der gemessenen Verzögerung; und
eine Einrichtung, um in der Basisstation zu dem ersten standardisierten Zeitversatz einen zweiten Zeitversatz hinzuzufügen, der sich auf die gemessene Verzögerung bezieht, wenn bestimmt wird, dass der Anruf in dem erweiterten Übertragungsmodus aufgebaut werden sollte, wobei die Basisstation Bursts von den Mobilstationen empfängt und die Mobilstationen Bursts von der Basisstation empfangen, während die gleiche Anzahl von Zeitschlitzen wie in dem herkömmlichen Übertragungsmodus aufrechterhalten wird.

## Revendications

1. Procédé pour permettre à des stations mobiles dans un système de radiocommunication cellulaire ayant une portée de cellule étendue et comprenant au moins une station de base fixe et un certain nombre de stations mobiles, de fonctionner à une distance accrue de la station de base, l'une au moins des stations mobiles étant dans cette portée de cellule étendue, la station de base et les stations mobiles émettant et recevant dans des créneaux temporels correspondants dans une trame d'émission et une trame de réception, respectivement, chaque trame d'émission étant décalée d'un premier décalage temporel normalisé par rapport à une trame de réception, chaque trame comprenant un certain nombre de créneaux temporels conformément à un mode de transmission normal classique, le procédé comprenant l'étape suivante : on émet une salve d'accès à partir des stations mobiles à l'intérieur d'un créneau temporel qui est étendu conformément à un mode de transmission étendu classique, afin de mesurer un retard pour une station mobile éloignée à une distance accrue de la station de base, le procédé étant caractérisé par les étapes suivantes:
on détermine à partir du retard mesuré si un appel doit être établi conformément au mode de transmission normal classique, au mode de transmission étendu classique ou conformément à un mode de transmission étendu; et
dans la station de base, on ajoute au premier décalage temporel normalisé un second décalage temporel lié au retard mesuré, si on détermine que l'appel doit être établi dans le mode de transmission étendu, grâce à quoi la station de base reçoit des salves provenant des stations mobiles, et les stations mobiles reçoivent des salves provenant de la station de base, tout en maintenant le même nombre de créneaux temporels que dans le mode de transmission normal classique.

2. Système de radiocommunication cellulaire ayant une portée de cellule étendue et comprenant au moins une station de base fixe et un certain nombre de stations mobiles, l'une au moins des stations mobiles se trouvant dans la portée de cellule étendue, la station de base et les stations mobiles émettant et recevant dans des créneaux temporels correspondants dans une trame d'émission et une trame de réception, respectivement, chaque trame d'émission étant déplacée d'un premier décalage temporel normalisé par rapport à une trame de réception, chaque trame comprenant un certain nombre de créneaux temporels conformément à un mode de transmission normal classique, ce système de radiocommunication cellulaire étant adapté pour émettre une salve d'accès à partir des stations mobiles à l'intérieur d'un créneau temporel qui est étendu conformément à un mode de transmission étendu classique, afin de mesurer un retard pour une station mobile éloignée à une distance accrue de la station de base, le système de radiocommunication cellulaire étant caractérisé par :
des moyens pour déterminer à partir du retard mesuré si un appel doit être établi conformément au mode de transmission normal classique, au mode de transmission étendu classique ou conformément à un mode de transmission étendu; et
des moyens pour ajouter, dans la station de base, au premier décalage temporel normalisé, un second décalage temporel lié au retard mesuré, s'il est déterminé que l'appel doit être établi dans le mode de transmission étendu, grâce à quoi la station de base reçoit des salves provenant des stations mobiles et les stations mobiles reçoivent des salves provenant de la station de base, tout en maintenant le même nombre de créneaux temporels que dans le mode de transmission normal classique.
